# FASCICULE DE BREVET EUROPEEN

(11) **EP 3 927 621 B1**
(45) Date de publication et mention de la délivrance du brevet: **19.07.2023**
(21) Numéro de dépôt: 20705941.1
(22) Date de dépôt: 17.02.2020
(51) Int. Cl.: B64D 35/06, B64C 11/00, B64C 11/48, B64D 27/24

(54) **PROPULSEUR ÉLECTRIQUE POUR AÉRONEF ET PROCÉDÉ D'UTILISATION D'UN TEL PROPULSEUR**
ELEKTRISCHE ANTRIEBSEINHEIT FÜR EIN FLUGZEUG UND VERFAHREN ZUR VERWENDUNG EINER SOLCHEN ANTRIEBSEINHEIT
ELECTRIC PROPULSION UNIT FOR AN AIRCRAFT AND METHOD FOR USING SUCH A PROPULSION UNIT

(30) Priorité: 18.02.2019 FR 1901595
(43) Date de publication de la demande: 29.12.2021
(73) Titulaire: SAFRAN, 75015 Paris (FR)
(72) Inventeur: SABER, Christelle, 77550 MOISSY-CRAMAYEL (FR); GIMENO, Anthony, 77550 MOISSY-CRAMAYEL (FR); MERLE, Sébastien, 77550 MOISSY-CRAMAYEL (FR)
(74) Mandataire: Argyma
(86) Numéro de dépôt international: PCT/EP2020/054010
(87) Numéro de publication internationale: WO 2020/169497

(56) Documents cités:
- WO-A2-2005/072233
- DE-A1- 2 420 709
- US-A- 3 997 131
- US-A1- 2005 082 421
- US-A1- 2009 121 073
- US-A1- 2010 001 143
- US-B2- 7 032 859

## Description

### DOMAINE TECHNIQUE DE L'INVENTION

La présente invention se rapporte au domaine de la propulsion électrique ou hybride électrique d'un aéronef, en particulier, permettant un décollage et un atterrissage vertical.

De manière connue, il a été proposé un aéronef comportant une pluralité de propulseurs électriques qui sont répartis dans l'aéronef. De manière connue, un propulseur électrique comporte un ou plusieurs organes de propulsion, hélice ou soufflante. Chaque organe de propulsion est relié à un moteur électrique d'entrainement. Chaque moteur électrique d'entrainement est relié à un onduleur électrique afin de commander son fonctionnement. L'onduleur électrique est relié à une source d'alimentation électrique (par exemple une batterie embarquée ou une génératrice de tension électrique associée à un redresseur) par l'intermédiaire d'un composant passif, par exemple, un condensateur de bus. L'onduleur électrique comporte une pluralité d'interrupteurs pilotables qui reçoivent des ordres de commande en provenance d'un calculateur d'implémentation des lois de commande. En pratique, cette chaine d'entrainement électrique possède une masse et un encombrement qui sont élevés, ce qui pénalise les performances de propulsion électrique.

En particulier, pour un propulseur électrique comportant deux organes de propulsion contrarotatifs, l'intégration de deux moteurs électriques différents pour entrainer les deux organes de propulsion est complexe.

On connait dans l'art antérieur par la demande de brevet EP2668097 un aéronef comportant plusieurs propulseurs électriques comportant chacun deux organes de propulsion contrarotatifs montés dans un carter. Pour limiter le poids de l'ensemble comportant le carter, les organes de propulsion sont entrainés par des moteurs électriques, positionnés en dehors du carter, qui sont reliés aux organes de propulsion par des arbres mécaniques, ce qui augmente l'encombrement et la masse de l'architecture de propulsion.

Par ailleurs, on connait dans l'art antérieur par la demande de brevet US7712701 un aéronef comportant plusieurs propulseurs électriques, chaque propulseur électrique comportant deux organes de propulsion contrarotatifs montés dans un carter périphérique et reliés à un moyeu central. Les organes de propulsion sont montés rotatifs par rapport au moyeu dans le carter périphérique. Les moteurs électriques sont intégrés dans le moyeu afin d'entrainer les organes de propulsion. Une telle architecture de propulsion présente néanmoins l'inconvénient d'augmenter le diamètre du moyeu de manière importante, ce qui diminue la section de la veine d'air et impacte le rendement de propulsion.

Un des objectifs est ainsi de réduire la masse et l'encombrement d'un propulseur électrique de manière à améliorer le rendement de propulsion.

De manière incidente, on connait par le document US2009121073A1 un propulseur vertical avec plusieurs étages et des câbles électriques organisés en canaux axiaux. Deux canaux adjacents ont des orientations différentes de manière à former des champs ayant des polarités opposées. Le document US7032859B2 enseigne un propulseur comportant un logement dans lequel est monté un stator comportant une pluralité d'enroulements qui sont commandés de manière indépendante par un module de contrôle. Les documents DE2420709A1 et US3997131A1 concernent un propulseur de turbomachine comportant un rotor aimanté qui est entrainé par un générateur électrique. Un module de contrôle permet de commander les impulsions de courant pour permettre un entrainement dans des directions opposées.

### PRESENTATION DE L'INVENTION

L'invention concerne un propulseur électrique pour aéronef, le propulseur électrique comportant au moins un premier organe de propulsion rotatif autour d'un axe X, un deuxième organe de propulsion rotatif autour de l'axe X et un unique moteur électrique à aimants configuré pour entrainer le premier organe de propulsion selon un premier sens de rotation et le deuxième organe de propulsion de manière contrarotative selon un deuxième sens de rotation.

L'invention est remarquable en ce que le moteur électrique comporte :
- un élément de stator périphérique comportant un premier étage périphérique et un deuxième étage périphérique qui sont décalés selon l'axe X,
- un premier élément de rotor, solidaire du premier organe de propulsion, configuré pour être entrainé magnétiquement par le premier étage périphérique,
- un deuxième élément de rotor, solidaire du deuxième organe de propulsion, configuré pour être entrainé magnétiquement par le deuxième étage périphérique,
- le premier étage périphérique comportant au moins une première phase, une deuxième phase et une troisième phase qui sont alternées selon une première séquence de manière à permettre une rotation du premier élément de rotor selon le premier sens de rotation,
- le deuxième étage périphérique comportant au moins la première phase, la deuxième phase et la troisième phase qui sont alternées selon une deuxième séquence de manière à permettre une rotation du deuxième élément de rotor selon le deuxième sens de rotation opposé au premier sens de rotation,
- la première phase, la deuxième phase et la troisième phase du premier étage périphérique sont respectivement reliées électriquement à la première phase, à la deuxième phase et à la troisième phase du deuxième étage périphérique.

Grâce à l'invention, un unique élément de stator peut commander de manière contrarotative deux éléments de rotor de manière à permettre une rotation contrarotative. De manière avantageuse, le propulseur électrique obtenu possède une conception simple avec une grande densité de puissance, c'est-à-dire, puissance importante pour un encombrement et une masse qui sont réduits. L'utilisation d'organes de propulsion contrarotatifs permet d'optimiser le redressement de l'air, ce qui améliore le rendement de propulsion et de diminuer les nuisances acoustiques. Il n'est nullement nécessaire de recourir à un module de contrôle afin de commander plusieurs éléments de stator de manière indépendante, en particulier, pour assurer leur synchronisation.

De manière préférée, le propulseur électrique comprend un carter périphérique s'étendant selon l'axe X et les organes de propulsion étant montés dans le carter périphérique. De préférence, l'élément de stator périphérique est monté dans le carter périphérique.

De manière avantageuse, l'utilisation d'un carter périphérique permet de guider le flux d'air lors de son accélération par les organes de propulsion. En outre, le carter périphérique permet de loger l'élément de stator. Cette double fonction permet d'augmenter la compacité et donc la densité de puissance.

De manière préférée, les éléments de rotor sont guidés dans le carter périphérique. Autrement dit, il n'existe pas un guidage unique via le moyeu central comme dans l'art antérieur. Une telle conception permet d'augmenter la section de passage du flux d'air dans le carter périphérique.

Selon un aspect préféré, le premier élément de rotor et le deuxième élément de rotor possèdent chacun une forme périphérique. Ainsi, ils peuvent être guidés de manière pratique sur toute la circonférence.

Selon un aspect de l'invention, le moteur électrique est un moteur à aimants permanents, en particulier, à flux radial.

De manière préférée, le premier élément de rotor et le deuxième élément de rotor sont respectivement montés extérieurement au premier organe de propulsion et au deuxième organe de propulsion. Cela permet avantageusement aux éléments de rotor de coopérer directement avec le carter périphérique. Les organes de propulsion peuvent ainsi librement accélérer le flux d'air.

De préférence, le premier élément de rotor est guidé en rotation par rapport au premier étage périphérique, en particulier, par au moins un roulement à billes ou un palier magnétique.

De manière préférée, les phases du premier étage périphérique sont alignées selon l'axe X avec les phases du deuxième étage périphérique. Ainsi, les lignes de champ magnétique sont optimisées afin d'éviter toute perte magnétique ou tout échauffement par induction.

Selon un aspect préféré, les premières phases du premier étage périphérique sont alignées selon l'axe X avec les premières phases du deuxième étage périphérique. Une telle caractéristique permet de faciliter l'implémentation de l'élément de stator.

De préférence, les deuxièmes phases du premier étage périphérique sont alignées selon l'axe X avec les troisièmes phases du deuxième étage périphérique.

De manière préférée, le courant électrique circulant dans une phase du premier étage périphérique selon un sens de circulation, le courant électrique, circulant dans la phase du deuxième étage périphérique qui est alignée avec la phase du premier étage périphérique, circule dans le même sens de circulation. Les pertes magnétiques sont ainsi réduites de manière optimale entre les étages de l'élément de stator.

De préférence, l'élément de stator périphérique comporte une zone d'interface, entre le premier étage périphérique et le deuxième étage périphérique, qui comporte des moyens de dissipation de chaleur, de manière préférée, des conducteurs thermiques, de la pâte thermique ou un circuit de refroidissement. La zone d'interface permet, d'une part, de permettre la liaison des phases et, d'autre part, d'améliorer le refroidissement au centre de l'élément de stator.

De préférence, le propulseur électrique pour aéronef comporte un onduleur de propulsion relié au moteur électrique de manière à commander le courant circulant dans les phases de l'élément de stator. De manière avantageuse, la chaine électrique du propulseur comporte un unique onduleur.

L'invention concerne également un procédé d'utilisation d'un propulseur électrique tel que présenté précédemment, comprenant une étape d'alimentation en courant des phases de l'élément de stator, une étape d'entrainement en rotation du premier élément de rotor selon le premier sens de rotation par le premier étage périphérique et une étape d'entrainement en rotation du deuxième élément de rotor selon le deuxième sens de rotation opposé au premier sens de rotation par le deuxième étage périphérique.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'une forme de réalisation d'un propulseur électrique selon l'invention comportant deux organes de propulsion contrarotatifs et
La figure 2a est une représentation schématique en coupe d'un premier organe de rotation entrainé par un premier étage statorique,
La figure 2b est une représentation schématique en coupe d'un deuxième organe de rotation entrainé par un deuxième étage statorique,
La figure 3 est une représentation schématique partielle d'un stator d'un moteur électrique comportant deux étages entrainant respectivement les deux organes de propulsion et
La figure 4 est une représentation schématique des étapes de mise en oeuvre de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

Il va dorénavant être présenté un propulseur électrique de conception nouvelle qui peut être monté sur un aéronef. De manière préférée, plusieurs propulseurs P sont montés de manière répartie sur un aéronef afin de permettre sa propulsion et, plus particulièrement, son décollage et son atterrissage vertical.

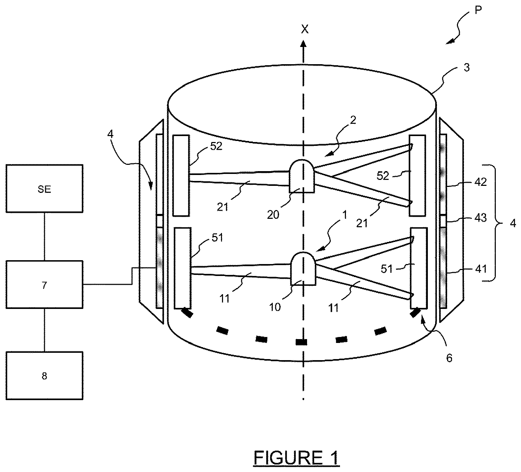

En référence à la figure 1, le propulseur électrique P comprend un premier organe de propulsion 1 rotatif autour d'un axe X et un deuxième organe de propulsion 2 rotatif autour de l'axe X et un unique moteur électrique à aimants 6 configuré pour entrainer le premier organe de propulsion 1 selon un premier sens de rotation R1 et le deuxième organe de propulsion 2 de manière contrarotative selon un deuxième sens de rotation R2.

De manière préférée, le propulseur électrique P ne comporte que deux organes de propulsion 1, 2. Néanmoins, il va de soi que l'invention s'applique à plus de 2 organes de propulsion 1, 2, en particulier, un nombre pair d'organes de propulsion 1, 2.

Dans cet exemple, le propulseur électrique P comprend un carter périphérique 3 s'étendant selon l'axe X dans lequel sont montés les organes de propulsion 1, 2 de manière à accélérer le flux d'air circulant dans la cavité intérieure du carter périphérique 3. Il va de soi que l'invention s'applique également à un propulseur électrique P dénué de carter périphérique 3, les organes de propulsion 1, 2 étant alors des hélices libres.

Selon l'invention, le propulseur électrique P comprend un élément de stator périphérique 4 qui est, dans cet exemple, monté dans le carter périphérique 3. L'élément de stator périphérique 4 comprend un premier étage périphérique 41 et un deuxième étage périphérique 42 qui sont décalés selon l'axe X. Le propulseur électrique P comprend en outre un premier élément de rotor 51, solidaire du premier organe de propulsion 1, configuré pour être entrainé magnétiquement par le premier étage périphérique 41 et un deuxième élément de rotor 52, solidaire du deuxième organe de propulsion 2, configuré pour être entrainé magnétiquement par le deuxième étage périphérique 42.

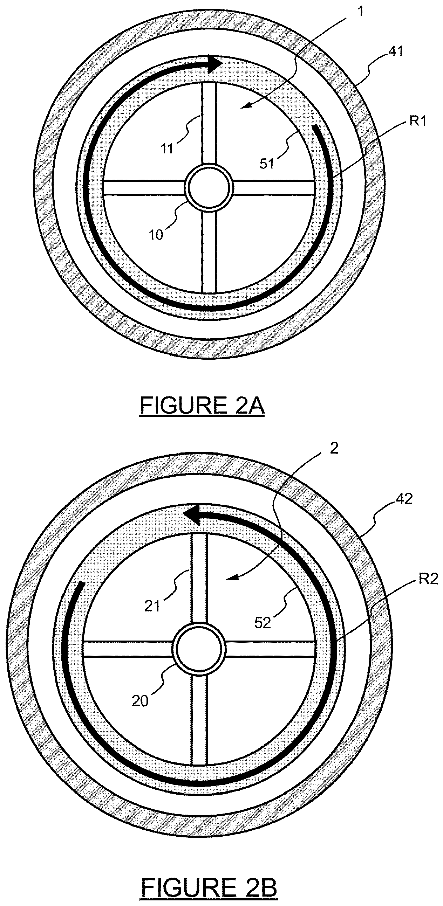

Dans cette forme de réalisation, comme illustré aux figures 2A, 2B, chaque organe de propulsion 1, 2 se présente sous la forme d'une hélice comportant un moyeu central 10, 20 et une pluralité d'aubes radiales 11, 21 dont les extrémités radialement intérieures sont reliées au moyeu central 10, 20 et dont les extrémités radialement extérieures sont reliées à un élément de rotor 51, 52.

Dans cet exemple, le propulseur électrique P comporte un onduleur de propulsion 7 afin de commander l'élément de stator 4, en particulier, le courant circulant dans ses phases P1, P2, P3 comme cela sera présenté par la suite. De préférence, le propulseur électrique P comporte un calculateur 8 d'implémentation des lois de commande. L'onduleur de propulsion 7 est relié à une source d'alimentation électrique SE (par exemple une batterie embarquée ou une génératrice de tension électrique associée à un redresseur) par l'intermédiaire d'un composant passif, par exemple, un condensateur de bus. L'onduleur de propulsion 7 comporte une pluralité d'interrupteurs pilotables qui reçoivent des ordres de commande en provenance du calculateur 8 d'implémentation des lois de commande. De manière préférée, le condensateur de bus est circulaire afin de permettre de limiter les contraintes d'encombrement lors de son montage dans le propulseur électrique P.

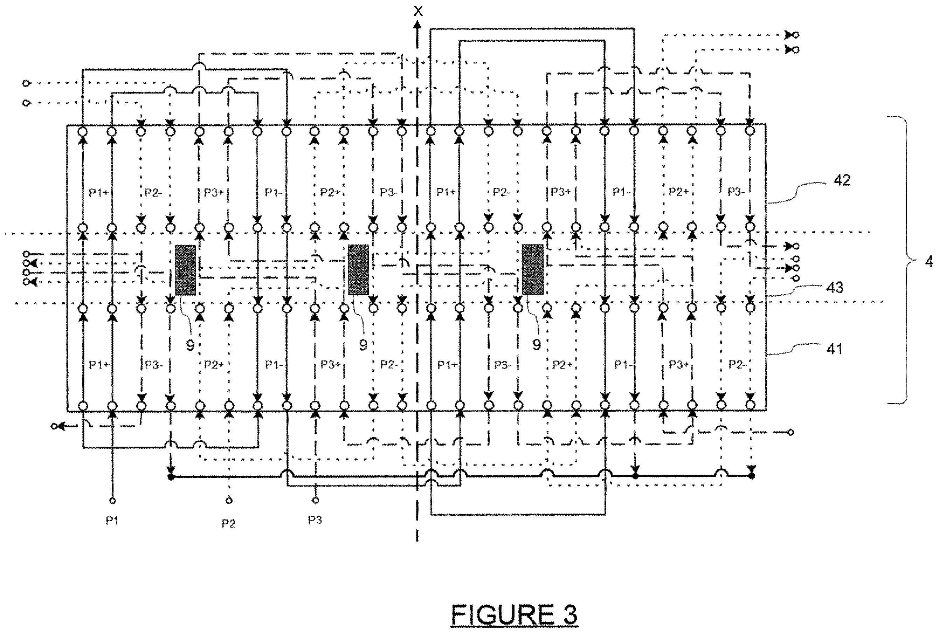

Comme illustré à la figure 3, le premier étage périphérique 41 comporte une première phase P1, une deuxième phase P2 et une troisième phase P3 qui sont alternées selon une première séquence SEQ1 de manière à permettre une rotation du premier élément de rotor 1 selon le premier sens de rotation R1. Dans cet exemple, la première séquence SEQ1 est la suivante : P1, P2, P3. De manière analogue, le deuxième étage périphérique 42 comporte la première phase P1, la deuxième phase P2 et la troisième phase P3 qui sont alternées selon une deuxième séquence SEQ2 de manière à permettre une rotation du deuxième élément de rotor 2 selon le deuxième sens de rotation R2 opposé au premier sens de rotation R1. Dans cet exemple, la deuxième séquence SEQ2 est la suivante : P1, P3, P2. Autrement dit, par rapport à la première séquence SEQ1, la deuxième phase P2 et la troisième phase P3 sont inversées dans la deuxième séquence SEQ2.

L'utilisation d'un moteur électrique 6 polyphasé permet d'augmenter la tolérance aux pannes, ce qui augmente la disponibilité du propulseur électrique P.

Comme illustré à la figure 3, la première phase P1, la deuxième phase P2 et la troisième phase P3 du premier étage périphérique 41 sont respectivement reliées électriquement à la première phase P1, à la deuxième phase P2 et à la troisième phase P3 du deuxième étage périphérique 42. Ainsi, les étages périphériques 41, 42 de l'élément de stator 4 sont interconnectés et peuvent être commandés par un même onduleur de propulsion 7. Cette mutualisation de l'onduleur de propulsion 7 ainsi que du calculateur 8 des lois de commande permet de diminuer l'encombrement et la masse d'un propulseur électrique P comportant deux organes de propulsion contrarotatifs 1, 2.

De manière préférée, le premier étage périphérique 41 et le deuxième étage périphérique 42 comportent le même nombre de phases P1, P2, P3 afin de faciliter la commande de l'élément de stator 4 par l'onduleur de propulsion 7. Dans cet exemple, il a été présenté un élément de stator 4 comportant uniquement trois phases P1, P2, P3. Il va néanmoins de soi que le nombre de phases P1, P2, P3 pourrait être plus élevé que 3.

Comme illustré à la figure 3, les phases P1, P2, P3 du premier étage périphérique 41 sont alignées selon l'axe X avec les phases P1, P2, P3 du deuxième étage périphérique 42 de manière à limiter les perturbations électromagnétiques. En particulier, les premières phases P1, du premier étage périphérique 41 sont alignées selon l'axe X avec les premières phases P1 du deuxième étage périphérique 42 de manière à faciliter la conception de l'élément de stator 4. De plus, les deuxièmes phases P2 du premier étage périphérique 41 sont alignées selon l'axe X avec les troisièmes phases P3 du deuxième étage périphérique 42 de manière à permettre une rotation contrarotative.

En référence à la figure 3, afin de limiter les perturbations électromagnétiques, le courant électrique circule dans une phase P1, P2, P3 du premier étage périphérique 41 selon un sens de circulation et circule, dans le même sens de circulation, dans la phase P1, P2, P3 du deuxième étage périphérique 42 qui est alignée avec la phase P1, P2, P3 du premier étage périphérique 41. Comme illustré à la figure 3, le courant circule dans le même sens dans les premières phases P1 qui sont alignées selon l'axe X. De même, le courant circule dans le même sens dans les phases P2, P3 qui sont alignées selon l'axe X.

Comme représenté à la figure 3, l'élément de stator périphérique 4 comporte une zone d'interface 43 entre le premier étage périphérique 41 et le deuxième étage périphérique 42 pour relier les phases P1, P2, P3 du premier étage périphérique 41 à celles du deuxième étage périphérique 42. De manière préférée, la zone d'interface 43 comporte des moyens de dissipation de chaleur 9, en particulier, des conducteurs thermiques, une pâte thermique ou un circuit de refroidissement de manière à évacuer les calories générées par effet joule ainsi que celles liées à la rotation des éléments de rotor 51, 52.

De manière avantageuse, les deux faces de l'élément de rotor 51, 52 et les deux faces de l'élément de stator 4 sont au contact d'un flux d'air, ce qui permet d'améliorer leur refroidissement. De manière préférée, le carter périphérique 3 comporte une ouverture de ventilation, en particulier une fente, afin de faciliter le refroidissement de l'élément de stator 4.

En référence à la figure 2A, le premier élément de rotor 51 se présente sous la forme d'une couronne périphérique d'axe X définissant une cavité intérieure dans laquelle est monté le premier organe de propulsion 1, les extrémités radialement extérieures des aubes 11 étant reliées au premier élément de rotor 51, en particulier à la surface radialement intérieure de la couronne périphérique dont le premier élément de rotor 51 a la forme. Le premier élément de rotor 51 est monté rotatif dans le carter périphérique 3 en regard du premier étage statorique 41.

De manière analogue, en référence à la figure 2B, le deuxième élément de rotor 52 se présente sous la forme d'une couronne périphérique d'axe X définissant une cavité intérieure dans laquelle est monté le deuxième organe de propulsion 2. Les extrémités radialement extérieures des aubes 21 sont reliées au deuxième élément de rotor 52, en particulier à la surface radialement intérieure de la couronne périphérique dont le deuxième élément de rotor 52 a la forme. Le deuxième élément de rotor 52 est monté rotatif dans le carter périphérique 3 en regard du deuxième étage statorique 42. Ainsi, le premier élément de rotor 51 et le deuxième élément de rotor 52 sont respectivement intégrés au premier organe de propulsion 1 et au deuxième organe de propulsion 2.

Dans cet exemple, chaque élément de rotor 51, 52 comporte une pluralité de pôles magnétiques, en particulier, organisés par paires, de manière à posséder un barycentre situé sur l'axe X. De manière connue, les pôles interagissent avec le champ magnétique tournant généré par le courant circulant dans les phases P1, P2, P3 de manière à entrainer en rotation chaque élément de rotor 51, 52 et l'organe de propulsion 1, 2 auquel il est associé.

De manière préférée, les éléments de rotor 51, 52 sont guidés en rotation dans le carter périphérique 3 par l'intermédiaire de paliers de guidage, en particulier, des roulements à billes ou des paliers magnétiques. Autrement dit, les éléments de rotor 51, 52 sont entrainés de manière périphérique et non de manière centrale comme dans un propulseur conventionnel. Le moyeu central possède une structure plus légère qui n'impacte pas la circulation du flux d'air.

De manière préférée, le moteur électrique 6 est à aimants permanents, en particulier, à flux radial. De manière préférée, un moteur électrique 6 du type Halbach est préféré car il permet d'augmenter la densité de puissance du système (puissance augmentée pour encombrement /masse constant).

Un exemple de mise en oeuvre d'un procédé d'utilisation d'un propulseur électrique P selon l'invention va être dorénavant présenté.

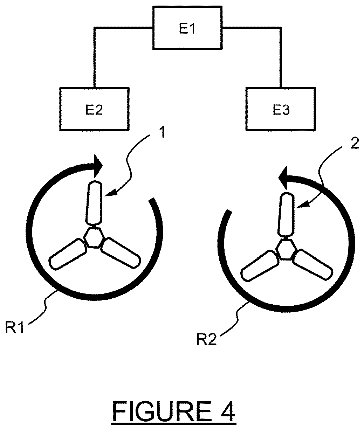

En référence à la figure 4, le procédé comporte une étape d'alimentation E1 en courant des phases P1, P2, P3 de l'élément de stator 4 via l'onduleur de propulsion 7 suite à une commande issue du calculateur de lois de commande 8. De manière avantageuse, chaque étage statorique 41, 42 est alimenté par un même onduleur de propulsion 7, ce qui permet de limiter le nombre de composants ainsi que leur masse.

Suite à l'étape d'alimentation E1, le procédé comporte une étape d'entrainement E2 en rotation du premier élément de rotor 1 selon le premier sens de rotation R1 par le premier étage périphérique 41 du fait de la circulation du courant dans les phases P1, P2, P3.

De manière analogue, du fait de la circulation du courant dans les phases P1, P2, P3 du deuxième étage périphérique 42, le procédé comporte une étape d'entrainement E3 en rotation du deuxième élément de rotor 2 selon le deuxième sens de rotation R2 par le deuxième étage périphérique 42. En effet, comme les séquences de phases SEQ1, SEQ2 sont différentes, les sens de rotation des organes de propulsion 1, 2 sont avantageusement opposés.

Dans cet exemple, chaque organe de propulsion 1, 2 est guidé en rotation autour de l'axe X dans le carter périphérique 3 par l'intermédiaire de paliers de guidage positionnés à l'interface entre le carter périphérique 3 et les éléments de rotor 51, 52 reliés respectivement aux organes de propulsion 1, 2. Les moyens de dissipation de chaleur 9 positionnés dans la zone d'interface 43 de l'élément de stator 4 permettent avantageusement d'éviter toute surchauffe lors du fonctionnement du propulseur électrique P.

## Revendications

1. Propulseur électrique (P) pour aéronef, le propulseur électrique (P) comportant au moins un premier organe de propulsion (1) rotatif autour d'un axe (X), un deuxième organe de propulsion (2) rotatif autour de l'axe (X) et un unique moteur électrique à aimants (6) configuré pour entrainer le premier organe de propulsion (1) selon un premier sens de rotation (R1) et le deuxième organe de propulsion (2) de manière contrarotative selon un deuxième sens de rotation (R2), le moteur électrique (6) comportant:
- un élément de stator périphérique (4) comportant un premier étage périphérique (41) et un deuxième étage périphérique (42) qui sont décalés selon l'axe (X),
- un premier élément de rotor (51), solidaire du premier organe de propulsion (1), configuré pour être entrainé magnétiquement par le premier étage périphérique (41),
- un deuxième élément de rotor (52), solidaire du deuxième organe de propulsion (2), configuré pour être entrainé magnétiquement par le deuxième étage périphérique (42),
**caractérisé en ce que**:
- le premier étage périphérique (41) comporte au moins une première phase (P1), une deuxième phase (P2) et une troisième phase (P3) qui sont alternées selon une première séquence (SEQ1) de manière à permettre une rotation du premier élément de rotor (1) selon le premier sens de rotation (R1),
- le deuxième étage périphérique (42) comporte au moins la première phase (P1), la deuxième phase (P2) et la troisième phase (P3) qui sont alternées selon une deuxième séquence (SEQ2) de manière à permettre une rotation du deuxième élément de rotor (2) selon le deuxième sens de rotation (R2) opposé au premier sens de rotation (R1), et **en ce que**
- la première phase (P1), la deuxième phase (P2) et la troisième phase (P3) du premier étage périphérique (41) sont respectivement reliées électriquement à la première phase (P1), à la deuxième phase (P2) et à la troisième phase (P3) du deuxième étage périphérique (42).

2. Propulseur électrique (P) pour aéronef selon la revendication 1, dans lequel le propulseur électrique (P) comprend un carter périphérique (3) s'étendant selon l'axe (X), les organes de propulsion (1, 2) étant montés dans le carter périphérique (3).

3. Propulseur électrique (P) pour aéronef selon la revendication 2, dans lequel les éléments de rotor (51, 52) sont guidés dans le carter périphérique (3).

4. Propulseur électrique (P) pour aéronef selon l'une des revendications 1 à 3, dans lequel le premier élément de rotor (51) et le deuxième élément de rotor (52) possèdent chacun une forme périphérique.

5. Propulseur électrique (P) pour aéronef selon l'une des revendications 1 à 4, dans lequel le premier élément de rotor (51) et le deuxième élément de rotor (52) sont respectivement montés extérieurement au premier organe de propulsion (1) et au deuxième organe de propulsion (2).

6. Propulseur électrique (P) pour aéronef selon l'une des revendications 1 à 5, dans lequel le premier élément de rotor (51) est guidé en rotation par rapport au premier étage périphérique (41), en particulier, par au moins un roulement à billes.

7. Propulseur électrique (P) pour aéronef selon l'une des revendications 1 à 6, dans lequel les phases (P1, P2, P3) du premier étage périphérique (41) sont alignées selon l'axe (X) avec les phases (P1, P2, P3) du deuxième étage périphérique (42).

8. Propulseur électrique (P) pour aéronef selon l'une des revendications 1 à 7, dans lequel les deuxièmes phases (P2) du premier étage périphérique (41) sont alignées selon l'axe (X) avec les troisièmes phases (P3) du deuxième étage périphérique (42).

9. Propulseur électrique (P) pour aéronef selon l'une des revendications 1 à 8, dans lequel le courant électrique circulant dans une phase (P1, P2, P3) du premier étage périphérique (41) selon un sens de circulation, le courant électrique, circulant dans la phase (P1, P2, P3) du deuxième étage périphérique (42) qui est alignée avec la phase (P1, P2, P3) du premier étage périphérique (41), circule dans le même sens de circulation.

10. Propulseur électrique (P) pour aéronef selon l'une des revendications 1 à 9, dans lequel l'élément de stator périphérique (4) comprend une zone d'interface, entre le premier étage périphérique (41) et le deuxième étage périphérique (42), qui comprend des moyens de dissipation de chaleur (9).

11. Procédé d'utilisation d'un propulseur électrique (P) selon l'une des revendications 1 à 10, comprenant une étape d'alimentation (E1) en courant des phases (P1, P2, P3) de l'élément de stator (4), une étape d'entrainement (E2) en rotation du premier élément de rotor (1) selon le premier sens de rotation (R1) par le premier étage périphérique (41) et une étape d'entrainement (E3) en rotation du deuxième élément de rotor (2) selon le deuxième sens de rotation (R2) opposé au premier sens de rotation (R1) par le deuxième étage périphérique (42).

## Patentansprüche

1. Elektrische Antriebseinheit (P) für ein Luftfahrzeug, wobei die elektrische Antriebseinheit (P) mindestens ein um eine Achse (X) rotatorisches erstes Antriebsorgan (1), ein um die Achse (X) rotatorisches zweites Antriebsorgan (2) und einen einzigen Elektromotor mit Magneten (6) aufweist, der dazu ausgelegt ist, das erste Antriebsorgan (1) in einer ersten Drehrichtung (R1) und das zweite Antriebsorgan (2) gegenrotatorisch in einer zweiten Drehrichtung (R2) anzutreiben, wobei der Elektromotor (6) aufweist:
- ein peripheres Statorelement (4), das eine erste periphere Stufe (41) und eine zweite periphere Stufe (42) aufweist, die gemäß der Achse (X) versetzt sind,
- ein erstes mit dem ersten Antriebsorgan (1) fest verbundenes Rotorelement (51), das dazu ausgelegt ist, von der ersten peripheren Stufe (41) magnetisch angetrieben zu werden,
- ein zweites dem zweiten Antriebsorgan (2) fest verbundenes Rotorelement (52), das dazu ausgelegt ist, von der zweiten peripheren Stufe (42) magnetisch angetrieben zu werden,
**dadurch gekennzeichnet, dass**:
- die erste periphere Stufe (41) mindestens eine erste Phase (P1), eine zweite Phase (P2) und eine dritte Phase (P3) aufweist, die sich gemäß einer ersten Sequenz (SEQ1) derart abwechseln, dass eine Rotation des ersten Rotorelements (1) in der ersten Drehrichtung (R1) gestattet ist,
- die zweite periphere Stufe (42) mindestens die erste Phase (P1) aufweist, die zweite Phase (P2) und die dritte Phase (P3) aufweist, die sich gemäß einer zweiten Sequenz (SEQ2) derart abwechseln, dass eine Rotation des zweiten Rotorelements (2) in der zweiten Drehrichtung (R2) entgegengesetzt zur ersten Drehrichtung (R1) gestattet ist, und dass
- die erste Phase (P1), die zweite Phase (P2) und die dritte Phase (P3) der ersten peripheren Stufe (41) jeweils mit der ersten Phase (P1), der zweiten Phase (P2) und der dritten Phase (P3) der zweiten peripheren Stufe (42) elektrisch verbunden sind.

2. Elektrische Antriebseinheit (P) für ein Luftfahrzeug nach Anspruch 1, wobei die elektrische Antriebseinheit (P) ein peripheres Gehäuse (3) umfasst, das sich gemäß der Achse (X) erstreckt, wobei die Antriebsorgane (1, 2) im peripheren Gehäuse (3) angebracht sind.

3. Elektrische Antriebseinheit (P) für ein Luftfahrzeug nach Anspruch 2, wobei die Rotorelemente (51, 52) im peripheren Gehäuse (3) geführt werden.

4. Elektrische Antriebseinheit (P) für ein Luftfahrzeug nach einem der Ansprüche 1 bis 3, wobei das erste Rotorelement (51) und das zweite Rotorelement (52) jeweils eine periphere Form besitzen.

5. Elektrische Antriebseinheit (P) für ein Luftfahrzeug nach einem der Ansprüche 1 bis 4, wobei das erste Rotorelement (51) und das zweite Rotorelement (52) jeweils außen am ersten Antriebsorgan (1) und am zweiten Antriebsorgan (2) angebracht sind.

6. Elektrische Antriebseinheit (P) für ein Luftfahrzeug nach einem der Ansprüche 1 bis 5, wobei das erste Rotorelement (51) im Verhältnis zur ersten peripheren Stufe (41) rotatorisch geführt wird, insbesondere von mindestens einem Kugellager.

7. Elektrische Antriebseinheit (P) für ein Luftfahrzeug nach einem der Ansprüche 1 bis 6, wobei die Phasen (P1, P2, P3) der ersten peripheren Stufe (41) gemäß der Achse (X) mit den Phasen (P1, P2, P3) der zweiten peripheren Stufe (42) ausgerichtet sind.

8. Elektrische Antriebseinheit (P) für ein Luftfahrzeug nach einem der Ansprüche 1 à 7, wobei die zweiten Phasen (P2) der ersten peripheren Stufe (41) gemäß der Achse (X) mit den dritten Phasen (P3) der zweiten peripheren Stufe (42) ausgerichtet sind.

9. Elektrische Antriebseinheit (P) für ein Luftfahrzeug nach einem der Ansprüche 1 bis 8, wobei der elektrische Strom in einer Phase (P1, P2, P3) der ersten peripheren Stufe (41) gemäß einer Zirkulationsrichtung fließt, wobei der elektrische Strom, der in der Phase (P1, P2, P3) der zweiten peripheren Stufe (42), die mit der Phase (P1, P2, P3) der ersten peripheren Stufe (41) ausgerichtet ist, in der gleichen Zirkulationsrichtung zirkuliert.

10. Elektrische Antriebseinheit (P) für ein Luftfahrzeug nach einem der Ansprüche 1 bis 9, wobei das periphere Statorelement (4) eine Schnittstellenzone zwischen der ersten peripheren Stufe (41) und der zweiten peripheren Stufe (42) umfasst, die Wärmeableitungsmittel (9) umfasst.

11. Verfahren zur Verwendung einer elektrischen Antriebseinheit (P) nach einem der Ansprüche 1 bis 10, umfassend einen Versorgungsschritt (E1) der Phasen (P1, P2, P3) des Statorelements (4) mit Strom, einen rotatorischen Antriebsschritt (E2) des ersten Rotorelements (1) in der ersten Drehrichtung (R1) durch die erste periphere Stufe (41) und einen rotatorischen Antriebsschritt (E3) des zweiten Rotorelements (2) in der zweiten Drehrichtung (R2) entgegengesetzt zur ersten Drehrichtung (R1) durch die zweite periphere Stufe (42).

## Claims

1. Electric propulsion unit (P) for an aircraft, the electric propulsion unit (P) comprising at least one first propulsion member (1) rotating about an axis (X), a second propulsion member (2) rotating about the axis (X) and a single electric motor with magnets (6) configured to drive the first propulsion member (1) in a first direction of rotation (R1) and the second propulsion member (2) counter-rotating in a second direction of rotation (R2), the electric motor (6) comprising :
- a peripheral stator element (4) comprising a first peripheral stage (41) and a second peripheral stage (42) that are offset along the axis (X),
- a first rotor element (51), rigidly attached to the first propulsion member (1), configured to be magnetically driven by the first peripheral stage (41),
- a second rotor element (52), rigidly attached to the second propulsion member (2), configured to be magnetically driven by the second peripheral stage (42),
- **characterized in that** the first peripheral stage (41) comprises at least a first phase (P1), a second phase (P2) and a third phase (P3) that are alternated according to a first sequence (SEQ1) so as to allow the first rotor element (1) to rotate in the first direction of rotation (R1),
- the second peripheral stage (42) comprises at least the first phase (P1), the second phase (P2) and the third phase (P3) that are alternated according to a second sequence (SEQ2) so as to allow the second rotor element (2) to rotate in the second direction of rotation (R2) opposite to the first direction of rotation (R1), and **in that**
- the first phase (P1), the second phase (P2) and the third phase (P3) of the first peripheral stage (41) are electrically connected to the first phase (P1), the second phase (P2) and the third phase (P3) of the second peripheral stage (42), respectively.

2. Electric propulsion unit (P) for an aircraft according to claim 1, wherein the electric propulsion unit (P) comprises a peripheral casing (3) extending along the axis (X), the propulsion members (1, 2) being mounted inside the peripheral casing (3).

3. Electric propulsion unit (P) for an aircraft according to claim 2, wherein the rotor elements (51, 52) are guided in the peripheral casing (3).

4. Electric propulsion unit (P) for an aircraft according to one of claims 1 to 3, wherein the first rotor element (51) and the second rotor element (52) each have a peripheral form.

5. Electric propulsion unit (P) for an aircraft according to one of claims 1 to 4, wherein the first rotor element (51) and the second rotor element (52) are mounted external to the first propulsion member (1) and the second propulsion member (2) respectively.

6. Electric propulsion unit (P) for an aircraft according to one of claims 1 to 5, wherein the first rotor element (51) is guided in rotation relative to the first peripheral stage (41), in particular by at least one ball bearing.

7. Electric propulsion unit (P) for an aircraft according to one of claims 1 to 6, wherein the phases (P1, P2, P3) of the first peripheral stage (41) are aligned along the axis (X) with the phases (P1, P2, P3) of the second peripheral stage (42).

8. Electric propulsion unit (P) for an aircraft according to one of claims 1 to 7, wherein the second phases (P2) of the first peripheral stage (41) are aligned along the axis (X) with the third phases (P3) of the second peripheral stage (42).

9. Electric propulsion unit (P) for an aircraft according to one of claims 1 to 8, wherein the electric current circulating in one phase (P1, P2, P3) of the first peripheral stage (41) in one circulation direction, the electric current, circulating in the phase (P1, P2, P3) of the second peripheral stage (42) that is aligned with the phase (P1, P2, P3) of the first peripheral stage (41), circulates in the same circulation direction.

10. Electric propulsion unit (P) for an aircraft according to one of claims 1 to 9, wherein the peripheral stator element (4) comprises an interface area, between the first peripheral stage (41) and the second peripheral stage (42), that comprises heat dissipation means (9).

11. Method of using an electric propulsion unit (P) according to any one of claims 1 to 10, comprising a step (E1) of supplying current to the phases (P1, P2, P3) of the stator element (4), a step (E2) of driving in rotation the first rotor element (1) about the first direction of rotation (R1) by the first peripheral stage (41) and a step (E3) of driving in rotation the second rotor element (2) about the second direction of rotation (R2) opposite to the first direction of rotation (R1) by the second peripheral stage (42).
